# EUROPEAN PATENT APPLICATION

(11) **EP 4 718 145 A2**
(43) Date of publication of application: **01.04.2026**
(21) Application number: 25198716.0
(22) Date of filing: 28.08.2025
(51) Int. Cl.: G02B 27/01

(54) **ADAPTIVE WINDSHIELD**

(30) Priority: 25.09.2024 US 202418895588
(71) Applicant: Distance Technologies Oy, 00530 Helsinki (FI)
(72) Inventor: Juhola, Mikko, 00530 Helsinki (FI); Konttori, Urho, 00530 Helsinki (FI)
(74) Representative: Moosedog Oy

(57) **Abstract**

Disclosed is a system (100) comprising a windshield (102) and processor(s) (120). The windshield comprises a first substrate (104) and a second substrate (106) that are optically transparent, and a liquid crystal (LC) layer (108) encased between the first substrate and the second substrate. A surface of at least one of: the first substrate, the second substrate that is in contact with the LC layer has at least one optical feature (114a-b) that pertains to at least one optical property. The at least one optical property comprises at least one of: optical power, diffraction, refraction, transmittance, reflectance, polarization. The processor(s) are configured to selectively adjust a refractive index of an LC material in at least a given portion of the LC layer, to modulate the at least one optical property in a corresponding portion (132a-b) of the windshield.

## Description

### TECHNICAL FIELD

The present disclosure relates to systems incorporating adaptive windshields for light field display. The present disclosure also relates to methods incorporating adaptive windshields for light field display.

### BACKGROUND

Heads-up displays (HUDs) are well known in automotives, aircrafts and other types of vehicles. An HUD comprises a light field display unit and an optical combiner that optically combines a synthetic light field produced by the light field display unit with a real-world light field. In a typical HUD, an optical combiner is often implemented as a part of a windshield of a vehicle.

In order to implement the optical combiner as a part of the windshield, certain optical features (for example, such as diffraction gratings, sub-wavelength gratings, or similar) are employed. However, conventional HUDs employing such optical features have certain drawbacks. Firstly, such optical features often produce unwanted artefacts. As an example, diffractive elements cause unwanted artefacts such as straylight, light scattering and rainbow effects. Secondly, a semi-reflective surface of the optical combiner may also reflect other light field (for example, such as sunlight reflecting off a surface of a watch or a smartphone) towards a user's eyes, thereby causing disturbance to the user.

Therefore, in light of the foregoing discussion, there exists a need to overcome the aforementioned drawbacks.

### SUMMARY

The present disclosure seeks to provide a system and a method for eliminating unwanted artefacts and unwanted reflections during presentation of virtual content via a synthetic light field augmenting a real-world light field in a heads-up display (HUD). The aim of the present disclosure is achieved by a system and a method that incorporate an adaptive windshield for light field display, as defined in the appended independent claims to which reference is made to. Advantageous features are set out in the appended dependent claims.

Throughout the description and claims of this specification, the words *"comprise", "include", "have",* and *"contain"* and variations of these words, for example *"comprising"* and *"comprises",* mean *"including but not limited to",* and do not exclude other components, items, integers or steps not explicitly disclosed also to be present. Moreover, the singular encompasses the plural unless the context otherwise requires. In particular, where the indefinite article is used, the specification is to be understood as contemplating plurality as well as singularity, unless the context requires otherwise.

### BRIEF DESCRIPTION OF THE DRAWINGS

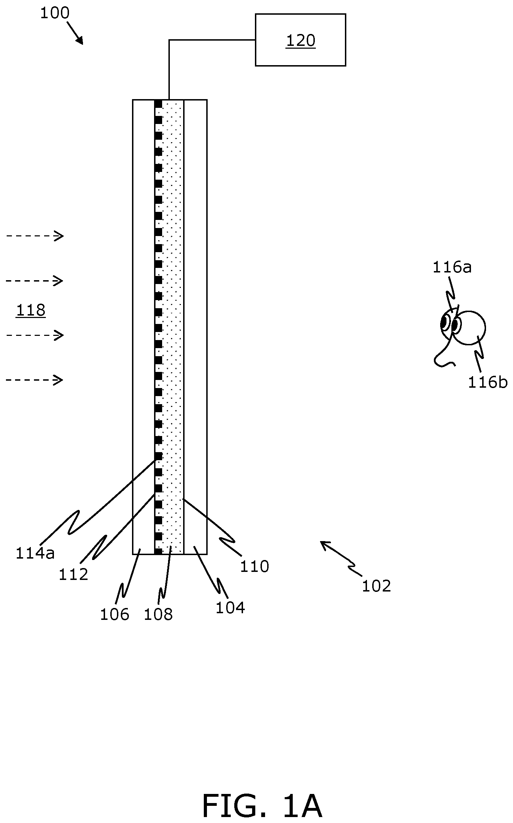

FIGs. 1A-1C depict different example implementations of a system incorporating an adaptive windshield for light field display, in accordance with an embodiment of the present disclosure;

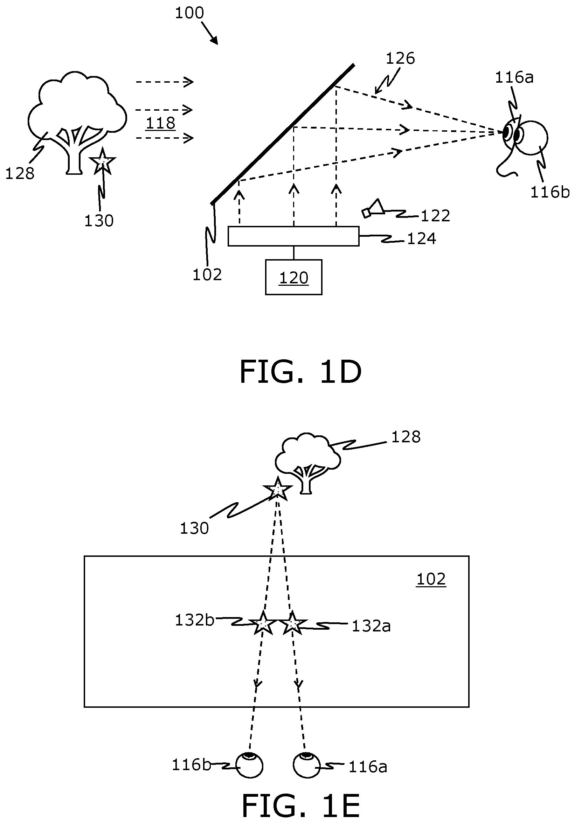

FIG. 1D depicts is an example implementation of the system, in accordance with a specific embodiment of the present disclosure; and
FIG. 1E depicts how a refractive index of an liquid crystal material in at least a given portion of a liquid crystal layer can be selectively adjusted, to modulate at least one optical property in a corresponding portion of the windshield, in accordance with an embodiment of the present disclosure.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practising the present disclosure are also possible.

In a first aspect, an embodiment of the present disclosure provides a system comprising:
a windshield comprising:
   a first substrate and a second substrate that are optically transparent; and
   a liquid crystal (LC) layer encased between the first substrate and the second substrate, wherein a surface of at least one of: the first substrate, the second substrate that is in contact with the LC layer has at least one optical feature that pertains to at least one optical property, wherein the at least one optical property comprises at least one of: optical power, diffraction, refraction, transmittance, reflectance, polarization; and
at least one processor configured to selectively adjust a refractive index of an LC material in at least a given portion of the LC layer, to modulate the at least one optical property in a corresponding portion of the windshield.

In a second aspect, an embodiment of the present disclosure provides a method implemented by a system comprising a windshield comprising a first substrate and a second substrate that are optically transparent, and a liquid crystal (LC) layer encased between the first substrate and the second substrate, the method comprising:
employing at least one optical feature of a surface of at least one of: the first substrate, the second substrate that is in contact with the LC layer to produce at least one optical property, wherein the at least one optical property comprises at least one of: optical power, diffraction, refraction, transmittance, reflectance, polarization; and
selectively adjusting a refractive index of an LC material in at least a given portion of the LC layer, to modulate the at least one optical property in a corresponding portion of the windshield.

The present disclosure provides the aforementioned system and the aforementioned method incorporating an adaptive windshield for light field display. Selectively adjusting the refractive index of the LC material in at least the given portion of the LC layer allows to modulate the at least one optical property in the corresponding portion of the windshield. This allows for selectively activating or deactivating the at least one optical property in different portions of the windshield on a need basis. By "at least", it is meant that the at least one optical property can be modulated in other portions of the windshield or an entirety of the windshield also. However, as the at least one optical property does not need to be activated in an entirety of the windshield, at least one virtual object can be presented to a user via a synthetic light field reflecting off the windshield, whilst eliminating unwanted artefacts and unwanted reflections. In other words, the selective activation or deactivation of the at least one optical property can be leveraged to eliminate unwanted artefacts and unwanted reflections during presentation of the at least one virtual object via the synthetic light field augmenting a real-world light field (passing through the windshield towards the user), for example, as explained in more detail later. Moreover, the system and the method are robust, fast, reliable, and support real-time activation/deactivation of the at least one optical property in the different portions of the windshield.

In some implementations, the at least one optical property comprises a single optical property. In such implementations, the single optical property can be produced using a single optical feature or multiple optical features. As an example, if the single optical property is polarization, the single optical property can be produced using a surface function based polarizer.

In other implementations, the at least one optical property comprises a plurality of optical properties, and the at least one optical feature comprises a plurality of optical features. For illustration purposes only, there will now be considered an example of such an implementation. Throughout the present disclosure, it will be considered that in use, the first substrate of the windshield is on a side of the user and the second substrate of the windshield is on a side of a real-world environment. Herein, the phrase "in use" refers to when the user sees the real-world environment through the windshield, that is, during use of the system. In other words, the user is closer to the first substrate than the second substrate during use. In an example, a user-facing surface of the second substrate could have reflectance as the at least one optical property, for example, to allow for the windshield or a part of the windshield to act as an optical combiner. In another example, a real-world facing surface of the first substrate could have polarization as the at least one optical property, for example, to allow for reducing glare incoming from the real-world environment. In this way, a plurality of optical properties can be implemented simultaneously in the windshield. In such implementations, both the user-facing surface of the second substrate and the real-world facing surface of the first substrate could be employed for providing the plurality of optical properties. It will be appreciated that the aforesaid surfaces are inner surfaces of the first substrate and the second substrate between which the LC layer is encased. Having a first optical feature on the real-world facing surface of the first substrate and a second optical feature on the user-facing surface of the second substrate, and selectively adjusting the refractive index of the LC material in at least the given portion of the LC layer allow for modulating the plurality of optical properties in at least the corresponding portion of the windshield. This also allows for selectively activating or deactivating the plurality of optical properties in at least the corresponding portion of the windshield. Throughout the present disclosure, the term "optical feature" refers to a physical feature that produces a given optical property. Optionally, the at least one optical feature comprises at least one of: a shape of said surface, a layer formed on said surface, said layer being disposed between said surface and the LC layer. In other words, the physical feature can be in a form of the shape of said surface, or in a form of the layer formed on said surface, or a combination thereof. As an example, when the at least one optical feature is a diffractive element, the shape of said surface can be in a form of diffraction gratings. As another example, when the at least one optical feature is a polarizer, the layer on said surface can be in a form of a surface function based polarizer layer. It will be appreciated that the at least one optical feature may be present in certain portions of said surface only; in other words, the at least one optical feature need not be present in an entirety of said surface.

When the refractive index of the LC material in at least the given portion of the LC layer is adjusted to be different from a refractive index of the at least one of: the first substrate, the second substrate, a relative refractive index is produced. As a result, an interface between the LC layer and the at least one of: the first substrate, the second substrate appears. This allows said surface to produce the at least one optical property, if the at least one optical property is produced by the shape of the surface. Thus, by making the interface appear or disappear (namely, by adjusting the refractive index of the LC material), the at least one optical property can be modulated. There will now be described various examples of the at least one optical property and how it can be modulated.

Optionally, the at least one optical property comprises optical power, wherein said surface is implemented as a diffractive element, wherein when selectively adjusting, the at least one processor is configured to adjust the refractive index of the LC material in at least the given portion of the LC layer to be different from a refractive index of the at least one of: the first substrate, the second substrate, thereby allowing the diffractive element to produce an optical power at the corresponding portion of the windshield.

In this regard, the at least one optical feature is a diffractive element, which is in a form of the shape of said surface. As mentioned earlier, when the refractive index of the LC material is adjusted to be different from the refractive index of the at least one of: the first substrate, the second substrate, an interface between said surface and the LC material appears. This allows the diffractive element to produce the optical power at the corresponding portion of the windshield. This optical power can be leveraged to change an optical depth at which a given virtual object or its part is being presented (via the corresponding portion of the windshield). This is because a virtual image of the given virtual object or its part is projected at the changed optical depth, due to the optical power that is produced locally at the corresponding portion of the windshield. This is particularly beneficial for a case where different virtual objects (or their parts) are to be presented at different optical depths from the user's eyes. It will be appreciated that the diffractive element is not limited to a single optical power, and can produce different optical powers. In this regard, different optical powers can be produced by adjusting the refractive index of the LC material to different levels in different portions of the LC layer. Moreover, it will be appreciated that the optical power can be a negative optical power or a positive optical power.

Notably, the optical power can be produced on a need basis, namely only when the virtual image is being presented. When the optical power is not required to be produced, the refractive index of the LC material can be adjusted to be same as or almost similar to the refractive index of the at least one of: the first substrate, the second substrate. This makes the interface between said surface and the LC material disappear; as a result, the diffractive element does not produce any optical power at the corresponding portion of the windshield. Thus, the optical power can be activated or deactivated on a need basis. Most importantly, a size and a shape of the given portion of the LC layer can be selected such that the given portion corresponds to an image segment of the virtual image that presents the given virtual object (or a part thereof). Thus, in other portions of the LC layer that do not correspond to said image segment of the virtual image, the optical power is not activated. This allows to eliminate unwanted artefacts such as straylight, light scattering and rainbow effects in other portions of the windshield.

It will be appreciated that apart from the optical power, the diffractive element can produce other optical properties as well. As an example, the diffractive element can be used to bend light, to produce a pre-specified light distribution, or similar. These will be illustrated in more detail later.

Moreover, optionally, the at least one optical property comprises optical power, said surface being the real-world facing surface of the first substrate that is implemented as a diffractive element, while the user-facing surface of the second substrate is semi-reflective, and the windshield is curved, wherein when selectively adjusting, the at least one processor is configured to:
determine an optical power being produced due to a curvature of the corresponding portion of the windshield; and
adjust the refractive index of the LC material in at least the given portion of the LC layer to be different from a refractive index of the first substrate, thereby allowing the diffractive element to produce an optical power that is opposite to the determined optical power.

A technical benefit of this is that the optical power produced by the diffractive element compensates for the optical power produced due to the curvature of the corresponding portion of the windshield. This is highly beneficial because if the optical power produced due to the curvature of the corresponding portion of the windshield is not compensated, it would lead to a distortion of a part of the synthetic light field reflecting off the user-facing surface of the second substrate. The image segment of the virtual image (representing the given virtual object or its part) that is presented via the corresponding portion of the windshield would get distorted. It will be appreciated that being semi-reflective, the user-facing surface of the second substrate is employed for reflecting the synthetic light field towards the user's eyes.

Although there are well-known techniques to compensate for the curvature of the windshield that involve modifying an input employed by a light field display unit for producing the synthetic light field, such techniques are often computationally expensive, requiring a lot of computing resources, and are prone to errors because the curvature of the windshield is often unsymmetrical and changes due to deforming of the windshield due to fluctuating temperatures. Therefore, it is highly beneficial to produce the optical power to compensate for the optical power produced due to the curvature of the corresponding portion of the windshield. Moreover, this allows for implementing the light field display unit in a form of a planar display unit (namely, having a flat screen). It will be appreciated that the curvature of the windshield pertains to a shape of at least one outer surface of the windshield. The at least one outer surface of the windshield could be a user-facing surface of the first substrate and/or a real-world facing surface of the second substrate.

Notably, the optical power can be activated or deactivated on a need basis, namely only when the virtual image is being presented. When the optical power is not required to be produced, the refractive index of the LC material can be adjusted to be same as or almost similar to the refractive index of the first substrate. This makes the interface between the real-world facing surface of the first substrate and the LC material disappear; as a result, the diffractive element does not produce any optical power at the corresponding portion of the windshield. Most importantly, a size and a shape of the given portion of the LC layer can be selected such that the given portion corresponds to the image segment of the virtual image that presents the given virtual object (or a part thereof). Thus, in the other portions of the LC layer that do not correspond to said image segment of the virtual image, the optical power is not activated. This allows to eliminate unwanted artefacts such as straylight, light scattering and rainbow effects in the other portions of the windshield.

Furthermore, optionally, the at least one optical property comprises diffraction, said surface being the user-facing surface of the second substrate, wherein said surface has a diffraction grating, and wherein when selectively adjusting, the at least one processor is configured to adjust the refractive index of the LC material in at least the given portion of the LC layer, to be different from a refractive index of the second substrate, thereby allowing the diffraction grating to bend light.

A technical benefit of this is that the light can be bent to re-direct the light in a specific direction. It will be appreciated that the user-facing surface of the second substrate is semi-reflective, and is employed for reflecting the synthetic light field towards the user's eyes. Whilst reflecting the synthetic light field, the diffraction (namely, the at least one optical property) can be activated to allow for bending the light in a manner that it is re-directed towards the user's eyes. This may, for example, allow for re-directing the synthetic light field towards a driver of a vehicle in which the system is being used. This may be particularly useful when the given virtual object is to be presented to the driver only. As an example, instrumentation of the vehicle (for example, such as speed gauze, warning lights, etc.) that are critical for the driver may be presented to the driver only. Moreover, this provides more options for placing the light field display unit inside the vehicle. Notably, a typical placement for the light field display unit is below the windshield. However, activating the diffraction to bend the light (upon reflection) in any desired direction allows for placing the light field display unit in any suitable position with respect to the windshield, because a reflection angle of the synthetic light field is not limited by an incline angle of the windshield with respect to the light field display unit.

Notably, the diffraction can be activated or deactivated on a need basis, namely only when the virtual image is being presented. When the diffraction is not required to be activated, the refractive index of the LC material can be adjusted to be same as or almost similar to the refractive index of the second substrate. This makes the interface between the user-facing surface of the second substrate and the LC material disappear; as a result, the diffractive element does not produce any diffraction at the corresponding portion of the windshield. Most importantly, a size and a shape of the given portion of the LC layer can be selected such that the given portion corresponds to the image segment of the virtual image that presents the given virtual object (or a part thereof). Thus, in the other portions of the LC layer that do not correspond to said image segment of the virtual image, the diffraction is not activated. This allows to eliminate unwanted artefacts such as straylight, light scattering and rainbow effects in the other portions of the windshield.

Likewise, optionally, the at least one optical property comprises reflection and phase shift, said surface being the user-facing surface of the second substrate, wherein said surface has meta elements, and wherein when selectively adjusting, the at least one processor is configured to adjust the refractive index of the LC material in at least the given portion of the LC layer, to be different from a refractive index of the second substrate, thereby allowing the meta elements to bend light.

A technical benefit of this is that the light can be bent to re-direct the light in a specific direction. It will be appreciated that the user-facing surface of the second substrate is semi-reflective, and is employed for reflecting the synthetic light field towards the user's eyes. Due to the meta elements, said surface (or a portion thereof) behaves as metasurfaces. The reflection and the phase shift (namely, the at least one optical property) can be activated to allow for bending the light in a manner that it is re-directed towards the user's eyes. This may, for example, allow for re-directing the synthetic light field towards the driver of the vehicle in which the system is being used. This may be particularly useful when the given virtual object is to be presented to the driver only. Moreover, this provides more options for placing the light field display unit inside the vehicle. Notably, a typical placement for the light field display unit is below the windshield. However, activating the phase shift to bend the light (upon reflection) in any desired direction allows for placing the light field display unit in any suitable position with respect to the windshield, because a reflection angle of the synthetic light field is not limited by an incline angle of the windshield with respect to the light field display unit.

Notably, the reflection and the phase shift can be activated or deactivated on a need basis, namely only when the virtual image is being presented. When the light is not required to be bent (namely, when the virtual image is not being presented), the refractive index of the LC material can be adjusted to be same as or almost similar to the refractive index of the second substrate. This makes the interface between the user-facing surface of the second substrate and the LC material disappear; as a result, the meta elements do not bend the light at the corresponding portion of the windshield. Most importantly, a size and a shape of the given portion of the LC layer can be selected such that the given portion corresponds to the image segment of the virtual image that presents the given virtual object (or a part thereof). Thus, in the other portions of the LC layer that do not correspond to said image segment of the virtual image, the reflection and the phase shift are not activated. This allows to eliminate unwanted artefacts such as straylight, light scattering and rainbow effects in the other portions of the windshield.

Moreover, optionally, the at least one optical property comprises reflectance, said surface being the user-facing surface of the second substrate, wherein said surface has a sub-wavelength grating, and wherein when selectively adjusting, the at least one processor is configured to adjust the refractive index of the LC material in at least the given portion of the LC layer, to match the refractive index of the second substrate, thereby reducing a reflectivity of said surface.

In this regard, the at least one optical feature is the sub-wavelength grating, which is in a form of the shape of said surface. Notably, the sub-wavelength grating makes said surface semi-reflective. As mentioned earlier, the first substrate and the second substrate are optically transparent. In this regard, the term "optically transparent" could refer to a transparency of approximately 90 percent or more. It will be appreciated that when the windshield (or its part) is employed to act as an optical combiner, an overall transparency of the windshield decreases. Notably, if the reflectance of the windshield were always activated, it would cause distraction to the user when she/he views the real-world environment through the windshield. This is because the transparency of the windshield could drop from a typical transparency of approximately 90 percent up to 80 percent, 70 percent or even less, thereby dimming the real-world light field passing therethrough, whilst also causing unwanted reflections from objects present inside the vehicle.

However, by adjusting the refractive index of the LC material in at least the given portion of the LC layer to match the refractive index of the second substrate, the reflectivity of said surface can be reduced. Notably, the reflectance can be activated or deactivated on a need basis, namely only when the virtual image is being presented. When no synthetic light field is required to be reflected towards the user's eyes (namely, when the virtual image is not being presented), the refractive index of the LC material can be adjusted to be same as or almost similar to the refractive index of the second substrate. This makes the interface between the user-facing surface of the second substrate and the LC material disappear; as a result, the sub-wavelength gratings do not reflect any light at the corresponding portion of the windshield.

Conversely, when the synthetic light field is required to be reflected towards the user's eyes (namely, when the virtual image is being presented), the refractive index of the LC material can be adjusted to be different from the refractive index of the second substrate. This makes the interface between the user-facing surface of the second substrate and the LC material re-appear; as a result, the sub-wavelength gratings reflect the synthetic light field towards the user's eye at the corresponding portion of the windshield. Most importantly, a size and a shape of the given portion of the LC layer can be selected such that the given portion corresponds to the image segment of the virtual image that presents the given virtual object (or a part thereof). Thus, in the other portions of the LC layer that do not correspond to said image segment of the virtual image, the reflectance is not activated at all. This allows to eliminate unwanted dimming of the real-world light field in the other portions of the windshield, whilst also eliminating unwanted reflections of other light field (for example, such as sunlight reflecting off a surface of a user's watch or phone) towards the user's eyes. In this way, different portions of the windshield can have different levels of reflectance on the need basis.

It will be appreciated that the same surface can have both diffraction gratings and sub-wavelength gratings. In this regard, the sub-wavelength gratings can be considered as a sub-section of the diffraction gratings.

Furthermore, optionally, the at least one optical property comprises polarization, said surface being the user-facing surface of the second substrate, wherein the at least one optical feature is a layer of a surface function based polarizer on the user-facing surface, and wherein when selectively adjusting, the at least one processor is configured to adjust the refractive index of the LC material in at least the given portion of the LC layer, to match a refractive index of the second substrate, thereby switching off the surface function based polarizer.

In this regard, the surface function based polarizer can be implemented as a diffractive polarizer or a metasurface polarizer. The diffractive polarizer comprises diffraction gratings, while the metasurface polarizer comprises meta elements.

By adjusting the refractive index of the LC material in at least the given portion of the LC layer to match the refractive index of the second substrate, the surface function based polarizer can be switched off selectively. Notably, the polarization can be activated or deactivated on a need basis. Optionally, in this regard, the system further comprises at least one real-world facing camera, wherein the at least one processor is configured to:
capture at least one two-dimensional (2D) real-world image of the real-world environment, by utilising the at least one real-world-facing camera;
optionally, reproject the at least one 2D real-world image from a perspective of the at least one real-world-facing camera to a perspective of a viewpoint of the user's eyes;
identify at least one image segment in the at least one 2D real-world image or a reprojected version of the at least one 2D real-world image that represents a real-world glare, based on intensity values of pixels in the at least one image segment and, optionally, a shape of the at least one image segment; and
determine at least one portion of the windshield through which the real-world glare is passing towards the user's eyes, by mapping viewing directions of the pixels in the at least one image segment from the user's eye with a viewing direction of at least one portion of the windshield from the given eye.

In this regard, the at least one image segment can be identified as an image segment whose pixels' intensity values are higher than a predefined threshold intensity. The predefined threshold intensity may, for example, lie in a range of 200 to 255, for a 8-bit representation of the pixels. The at least one image segment may also be identified based on its shape, because real-world glare are known to often occur in certain shapes. This may depend on an environmental condition in which the system is being used currently. For example, in a bright outdoor environment, the real-world glare may be due to direct sunlight being reflected off a reflective surface. In such a case, a real-world glare may be strongly polarized along a specific polarization orientation, due to reflection from a surface at large incident angles. In such a case, the specific polarization orientation may depend on an orientation of the surface.

Thus, the surface function based polarizer can be activated (namely, switched on) only in the at least one portion of the windshield through which the real-world glare is passing towards the user's eyes. For this purpose, the refractive index of the LC material in at least one corresponding portion of the LC layer can be adjusted to be different from the refractive index of the second substrate. This makes the interface between the user-facing surface of the second substrate and the LC material re-appear; as a result, the surface function based polarizer is activated, thereby polarizing a part of the real-world light field (that corresponds to the real-world glare) incoming through the at least one portion of the windshield.

A technical benefit of activating the surface function based polarizer in such a manner is that it allows for decreasing a transmittance of said part of the real-world light field (having a specific polarization orientation) through the at least one portion of the windshield towards the user's eyes. This facilitates a comfortable viewing experience to the user. It will be appreciated that in most situations, the real-world glare is coming from a significant distance; thus, even without reprojection, an incoming direction of the real-world glare is essentially the same for the at least one real-world-facing camera and the user, even though they are at different positions. This is because a difference between a location of the user's eyes and a location of the at least one real-world-facing camera is insignificant when compared to a distance of a source of the real-world glare (for example, such as the Sun, reflections from other vehicles, etc.) from the at least one real-world-facing camera.

Conversely, when there is no real-world glare, the refractive index of the LC material in at least the given portion of the LC layer can be adjusted to be same as or almost similar to the refractive index of the second substrate. This makes the interface between the user-facing surface of the second substrate and the LC material disappear. As a result, the surface function based polarizer is deactivated, and the real-world light field incoming through at least the corresponding portion of the windshield is not polarized unnecessarily. Notably, unnecessary polarization dims the real-world light field, which is not desirable. Moreover, this also allows to eliminate unwanted artefacts such as straylight, light scattering and rainbow effects in the corresponding portion of the windshield.

Additionally, optionally, the real-world facing surface of the first substrate also has a layer of another surface function based polarizer, wherein a polarization orientation of the another surface function based polarizer of the real-world facing surface is orthogonal to a polarization orientation of the surface function based polarizer of the user-facing surface.

In this regard, the refractive index of the first substrate is same as or almost similar to the refractive index of the second substrate. Thus, the refractive index of the LC material in at least the given portion of the LC layer is adjusted to match the refractive index of the first substrate and the refractive index of the second substrate. A technical benefit of this is that both the surface function based polarizer and the another surface function based polarizer are deactivated (namely, switched off) simultaneously.

On the other hand, both the surface function based polarizer and the another surface function based polarizer can be activated (namely, switched on) simultaneously in the at least one portion of the windshield through which the real-world glare is passing towards the user's eyes. For this purpose, the refractive index of the LC material in the at least one corresponding portion of the LC layer can be adjusted to be different from the refractive index of the first substrate and the refractive index of the second substrate. A technical benefit of simultaneous activation of both the surface function based polarizer and the another surface function based polarizer in the at least one portion of the windshield is that the transmittance of the part of the real-world light field (that corresponds to the real-world glare) incoming through the at least one portion of the windshield is decreased drastically. In other words, the real-world glare is blocked most efficiently. This facilitates a very comfortable viewing experience to the user. As such simultaneous activation can be achieved in real time, it enables to prevent not just any real-world glare, but also any bright dazzling light (for example, high beam light of other vehicles approaching from an opposite direction) from suddenly hitting the user's eyes. This is particularly beneficial for the vehicle's driver, who may not be able to drive safely due to such bright dazzling light.

Furthermore, optionally, the system further comprises tracking means, wherein the at least one processor is configured to:
utilise the tracking means to determine gaze directions of eyes of at least one user; and
select the given portion of the LC layer, based on the gaze directions of the eyes of the at least one user.

A technical benefit of selecting the given portion of the LC layer based on the gaze direction of the user's eyes is that it allows for modulating the at least one optical property in a particular portion of the windshield through which the user is looking. This is beneficial because, for the user who is looking through the given portion of the LC layer, the user's vision is most impacted or disturbed by what she/he sees through the given portion of the LC layer. As an example, if the real-world glare is passing through a portion of the windshield that is far away from another portion of the windshield through which the user is looking, the real-world glare may not be necessary to reduce at all. This would allow for saving computational resources as well as power consumption of the system.

Moreover, in some implementations, the system further comprises the light field display unit, wherein at least a part of the windshield is implemented as the optical combiner, and wherein the at least one processor is configured to:
generate an input to be employed by the light field display unit for producing the synthetic light field; and
employ the input at the light field display unit to produce the synthetic light field, wherein the optical combiner is employed to reflect the synthetic light field towards the user's eyes, whilst optically combining the synthetic light field with the real-world light field of the real-world environment.

In such implementations, the light field display unit need not be an autostereoscopic display, and can be a regular 2D display.

In other implementations, the system further comprises:
the tracking means; and
the light field display unit,
wherein at least a part of the windshield is implemented as the optical combiner, and wherein the at least one processor is configured to:
   utilise the tracking means to determine a relative location of a first eye and of a second eye of the at least one user with respect to the optical combiner;
   generate an input to be employed by the light field display unit for producing the synthetic light field, based on the relative location of the first eye and of the second eye of the at least one user with respect to the optical combiner; and
   employ the input at the light field display unit to produce the synthetic light field, wherein the optical combiner is employed to reflect a first part and a second part of the synthetic light field towards the first eye and the second eye of the at least one user, respectively, whilst optically combining the first part and the second part of the synthetic light field with a real-world light field of a real-world environment.

Such implementations pertain to autostereoscopic displays, which are a type of three-dimensional (3D) displays that presents a 3D visual scene to users, without a need for special glasses or other headgear.

Throughout the present disclosure, the term *"tracking means"* refers to a specialised equipment for detecting and/or tracking a location of at least a first eye and a second eye of a given user. Optionally, the tracking means is implemented as at least one tracking camera. The at least one tracking camera may comprise at least one of: at least one visible-light camera, at least one infrared (IR) camera, at least one depth camera. Examples of such a visible-light camera include, but are not limited to, a Red-Green-Blue (RGB) camera, a Red-Green-Blue-Alpha (RGB-A) camera, a Red-Green-Blue-Depth (RGB-D) camera, a Red-Green-Blue-White (RGBW) camera, a Red-Yellow-Yellow-Blue (RYYB) camera, a Red-Green-Green-Blue (RGGB) camera, a Red-Clear-Clear-Blue (RCCB) camera, a Red-Green-Blue-Infrared (RGB-IR) camera, and a monochrome camera. Examples of such a depth camera include, but are not limited to, a Time-of-Flight (ToF) camera, a light detection and ranging (LiDAR) camera, a Red-Green-Blue-Depth (RGB-D) camera, a laser rangefinder, a stereo camera, a plenoptic camera, a ranging camera, a Sound Navigation and Ranging (SONAR) camera. It will be appreciated that any combination of various different types of cameras (for example, such as the at least one visible-light camera, the at least one IR camera and the at least one depth camera) may be utilised in the tracking means. When different types of images captured by the various different types of tracking cameras are utilised, the location of the user's eyes can be determined highly accurately, as results obtained from one type of image can be used to refine results obtained from another type of image. Herein, these different types of images constitute the tracking data collected by the tracking means, and may be in the form of at least one of: visible-light images, IR images, depth images.

It will be appreciated that the at least one tracking camera is arranged to face the at least one user, to facilitate tracking of the location of the user's eyes. A relative location of the at least one tracking camera with respect to the optical combiner is fixed, and is pre-known. This enables to determine the relative location of the first eye and of the second eye of the at least one user with respect to the optical combiner. Optionally, in this regard, when the tracking means are utilised to detect and/or track the location of the first eye and of the second eye, a location of the first eye and of the second eye with respect to the at least one tracking camera is accurately known. Thus, the relative location of the first eye and of the second eye with respect to the optical combiner can be determined, based on the relative location of the at least one tracking camera with respect to the optical combiner and the location of the first eye and of the second eye with respect to the at least one tracking camera. It will be appreciated that the tracking means tracks both eyes of the at least one user with a significantly high accuracy and precision, such that an error in determining the relative location may, for example, be minimised to within a tolerance range of approximately (+/-) 8 millimetres.

It will be appreciated that the tracking means is employed to repeatedly track the location of at least the eyes of the given user throughout a given session of using the system. This allows for repeatedly determining the relative location of the first eye and of the second eye with respect to the optical combiner in real time or near-real time. Beneficially, this allows for presenting the at least one user with an augmented view of the synthetic light field with the real-world light field in an autostereoscopic manner. It is to be understood that when the synthetic light field is being produced for a plurality of users simultaneously, relative locations of both eyes of each user from amongst the plurality of users are determined in a same manner as discussed hereinabove.

The at least one processor controls an overall operation of the system. The at least one processor is communicably coupled to the tracking means, the light field display unit and a drive circuit of windshield. Optionally, the at least one processor is implemented as a processor of the light field display unit. Alternatively, optionally, the at least one processor is implemented as a processor of a computing device that is communicably coupled to the light field display unit. Examples of the computing device include, but are not limited to, a laptop, a desktop, a tablet, a phablet, a personal digital assistant, a workstation, and a console. Yet alternatively, optionally, the at least one processor is implemented as a cloud server (namely, a remote server) that provides a cloud computing service.

It will be appreciated that the windshield comprises the drive circuit, which is employed to control the LC layer. The drive circuit is electrically coupled to a first electrode deposited on the first substrate and a second electrode deposited on the second substrate, wherein the first electrode is disposed between the first substrate and the LC layer, and the second electrode is disposed between the second substrate and the LC layer. Such electrodes and drive circuits are well-known in the art.

It is noteworthy that the aforementioned system works well with a thin layer of the LC material. This is because the LC layer is not required to produce the optical power itself, but the refractive index of the LC material is adjusted to make the aforesaid interface between said surface and the LC layer to appear or disappear, as described earlier. Thinner the layer of the LC material, lower is an amount of potential difference (between the first electrode and the second electrode) that is required to adjust the refractive index of the LC material. Thus, electrical power requirements of the system are reduced greatly.

Moreover, it will be appreciated that at least one of: the first electrode, the second electrode is in a form of a plurality of electrode segments. This allows for adjusting the refractive index of the LC material to different levels in different portions of the LC layer. Optionally, in this regard, the plurality of electrode segments are arranged in a form of a grid. When the refractive index of the LC material in the given portion of the LC layer is to be adjusted, a subset of electrode segments (from the plurality of electrode segments) that correspond to the given portion of the LC layer can be selected. The refractive index of the LC material in the given portion of the LC layer can then be adjusted by controlling the subset of electrode segments accordingly.

Throughout the present disclosure, the term *"light field display unit"* refers to a specialised equipment that is capable of producing the synthetic light field. In other words, the light field display unit is utilised to employ the input (generated by the at least one processor) to produce the synthetic light field at a given resolution. Pursuant to embodiments of the present disclosure, different types of light field display units can be implemented. For example, the light field display unit can be any one of: a hogel-based light field display unit, a lenticular array based light field display unit, a parallax-barrier based light field display unit, a hologram-projector based light field display unit, a scanning-laser based light field display unit, a CRT-like light field display unit. Accordingly, the input employed by the light field display unit can be in various different forms, depending on a type of the light field display unit that is implemented. As a first example, in case of a hogel-based light field display unit or a lenticular array based light field display unit or a parallax-barrier based light field display unit, the input can be in a form of a light field image comprising pixels. As a second example, in case of a hologram-projector based light field display unit, the input can be in a form of a holographic recording having a holographic interference pattern. As a third example, in case of a scanning-laser based light field display unit, the input can be in a form of any one of: image data, vector graphics, vector paths. As a fourth example, in case of a cathode ray tube (CRT) -like light field display unit, the input can be in a form of a video signal comprising analog electrical signals. Depending on the type of the light field display unit, a light-emitting component of the light field display unit may be implemented in various different forms, for example, such as a backlight, light-emitting diodes (LEDs), organic LEDs (OLEDs), micro LEDs, a laser, a spatial light modulator, among others. All the aforementioned forms of light field display units and their corresponding inputs are well known in the art.

Upon reflection of the first part and the second part of the synthetic light field from the optical combiner, visual information corresponding to a first part of the input and a second part of the input is perceived by the first eye and the second eye, respectively, as a first virtual image and a second virtual image. In case of a light field image, the input may be understood to be a two-dimensional (2D) image comprising a plurality of pixels, wherein the first part of the input comprises a first set of pixels from amongst the plurality of pixels that is responsible for generating the first part of the synthetic light field that corresponds to the first eye, and the second part of the input comprises a second set of pixels from amongst the plurality of pixels that is responsible for generating the second part of the synthetic light field that corresponds to the second eye. It will be appreciated that the pixels belonging to the first set are not arranged in a continuous manner across the light field image (namely, the input); similarly, the pixels belonging to the second set are also not arranged in a continuous manner across the light field image. Optionally, the pixels belonging to the first set and the pixels belonging to the second set may be arranged in alternating vertical stripes across a horizontal field of view of the light field image, wherein each vertical stripe comprises one or more scanlines of pixels. This is because humans perceive depth mainly based on horizontal binocular parallax. Thus, in this way, the light field image would be considerably different as compared to a conventional 2D image that is displayed via conventional 2D displays, because the (single) light field image would comprise visual information corresponding to the first eye as well as the second eye of the at least one user. When the light field image is displayed, the visual information corresponding to the first eye and the second eye is directed by a multiscopic optical element of the light field display unit. The multiscopic optical element may, for example, be implemented as a lenticular array or a parallax barrier.

Throughout the present disclosure, the term *"synthetic light field"* refers to a light field that is produced (namely, generated) synthetically by the light field display unit, while the term *"real-world light field"* refers to a light field emanating from the real-world environment in which the given user is present. It will be appreciated that in case of the real-world light field, light from, for example, a natural light source (such as the Sun) and/or an artificial light source (such as a lamp, a bulb, a tube-light, or similar), are reflected off real-world objects (or their portions) to be incident towards the eyes of the given user. In this way, visual information (for example, such as colour information, optical depth information, and the like) pertaining to said real-world objects is typically perceived by the first eye and the second eye. On the other hand, in case of the synthetic light field, light emanating from the light field display unit, upon reflecting off the optical combiner, is incident on the first eye and the second eye. In this way, visual information pertaining to the at least one virtual object can be perceived by the first eye and the second eye.

Throughout the present disclosure, the term *"optical combiner"* refers to a specialised equipment that is capable of reflecting a corresponding part of the synthetic light field towards a given eye of the given user, whilst optically combining said part of the synthetic light field with the real-world light field. Optionally, the optical combiner is implemented by way of at least one of: a lens, a mirror, a semi-transparent mirror, a semi-transparent film, a semi-transparent flexible membrane, a prism, a beam splitter, an optical waveguide, a polarizer. Optical combiners are well-known in the art. Optionally, a tilt angle of the optical combiner (namely, the windshield) with respect to an image plane of the light field display unit lies in a range of 10 degrees and 75 degrees.

In some implementations, the at least one virtual object is a part of a virtual environment. Optionally, in such implementations, the at least one processor is configured to generate the light field image from a perspective of the relative location of the first eye and the second eye of the at least one user with respect to the optical combiner, by employing a three-dimensional (3D) model of the virtual environment. In this regard, the first virtual image and the second virtual image are generated from the perspective of the relative location of the first eye and the second eye with respect to the optical combiner. The light field image is then generated by utilising the first virtual image and the second virtual image. The term "virtual object" refers to a computer-generated object (namely, a digital object). Examples of the at least one virtual object may include, but are not limited to, a virtual navigation tool, a virtual gadget, a virtual message, a virtual entity, a virtual entertainment media, a virtual vehicle or part thereof, and a virtual information. The term "three-dimensional model" of the virtual environment refers to a data structure that comprises comprehensive information pertaining to the at least one virtual object. Such a comprehensive information is indicative of at least one of: a plurality of features of the at least one virtual object or its portions, a shape and a size of the at least one virtual object or its portions, a pose of the at least one virtual object or its portions, a material of the at least one virtual object or its portions, a colour and an optical depth of the at least one virtual object or its portions. The 3D model may be generated in the form of a 3D polygonal mesh, a 3D point cloud, a 3D surface cloud, a voxel-based model, or similar. Optionally, the at least one processor is configured to store the 3D model at a data repository that is communicably coupled to the at least one processor. The data repository may be implemented as a memory of the at least one processor, a cloud-based database, or similar. In other implementations, the at least one processor is configured to generate the first virtual image and the second virtual image to be presented to the first eye and the second eye of the at least one user in a form of 2D user interface (UI) elements, and utilise the first virtual image and the second virtual image to generate the light field image. The 2D UI elements could pertain to, for example, a virtual navigation tool, a virtual gadget, a virtual message, a virtual entity, a virtual entertainment media, a virtual information, or similar.

Furthermore, optionally, when generating the light field image, the at least one processor is configured to determine, within the light field image, a position of a given pixel of the first set and a position of a given pixel of the second set that correspond to a given synthetic three-dimensional (3D) point, based on an interpupillary distance between the eyes of the user and an optical depth at which the given synthetic 3D point is to be displayed. This allows for presenting the given synthetic 3D point at said optical depth, by utilising binocular disparity.

The present disclosure also relates to the method as described above. Various embodiments and variants disclosed above, with respect to the aforementioned first aspect, apply mutatis mutandis to the method.

Optionally, the at least one optical property comprises optical power, wherein said surface is implemented as a diffractive element, wherein the step of selectively adjusting comprises adjusting the refractive index of the LC material in at least the given portion of the LC layer to be different from a refractive index of the at least one of: the first substrate, the second substrate, thereby allowing the diffractive element to produce an optical power at the corresponding portion of the windshield.

Moreover, optionally, the at least one optical property comprises optical power, wherein in use, the first substrate is on a side of a user, and the second substrate is on a side of a real-world environment, said surface being a real-world facing surface of the first substrate that is implemented as a diffractive element, while a user-facing surface of the second substrate is semi-reflective, and the windshield is curved, wherein the step of selectively adjusting comprises:
determining an optical power being produced due to a curvature of the corresponding portion of the windshield; and
adjusting the refractive index of the LC material in at least the given portion of the LC layer to be different from a refractive index of the first substrate, thereby allowing the diffractive element to produce an optical power that is opposite to the determined optical power.

Furthermore, optionally, the at least one optical property comprises diffraction, wherein in use, the first substrate is on a side of a user, and the second substrate is on a side of a real-world environment, said surface being a user-facing surface of the second substrate, wherein said surface has a diffraction grating, and wherein the step of selectively adjusting comprises adjusting the refractive index of the LC material in at least the given portion of the LC layer, to be different from a refractive index of the second substrate, thereby allowing the diffraction grating to bend light.

Likewise, optionally, the at least one optical property comprises reflection and phase shift, wherein in use, the first substrate is on a side of a user, and the second substrate is on a side of a real-world environment, said surface being a user-facing surface of the second substrate, wherein said surface has meta elements, and wherein the step of selectively adjusting comprises adjusting the refractive index of the LC material in at least the given portion of the LC layer, to be different from a refractive index of the second substrate, thereby allowing the meta elements to bend light.

Moreover, optionally, the at least one optical property comprises reflectance, wherein in use, the first substrate is on a side of a user, and the second substrate is on a side of a real-world environment, said surface being a user-facing surface of the second substrate, wherein said surface has a sub-wavelength grating, and wherein the step of selectively adjusting comprises adjusting the refractive index of the LC material in at least the given portion of the LC layer, to match a refractive index of the second substrate, thereby reducing a reflectivity of said surface.

Furthermore, optionally, the at least one optical property comprises polarization, wherein in use, the first substrate is on a side of a user, and the second substrate is on a side of a real-world environment, said surface being a user-facing surface of the second substrate, wherein the at least one optical feature is a layer of a surface function based polarizer on the user-facing surface, and wherein the step of selectively adjusting comprises adjusting the refractive index of the LC material in at least the given portion of the LC layer, to match a refractive index of the second substrate, thereby switching off the surface function based polarizer. Additionally, optionally, a real-world facing surface of the first substrate also has a layer of another surface function based polarizer, wherein a polarization orientation of the another surface function based polarizer of the real-world facing surface is orthogonal to a polarization orientation of the surface function based polarizer of the user-facing surface.

Moreover, optionally, the method further comprises:
utilising tracking means to determine gaze directions of eyes of at least one user; and
selecting the given portion of the LC layer, based on the gaze directions of the eyes of the at least one user.

### DETAILED DESCRIPTION OF THE DRAWINGS

Referring to FIGs. 1A-1C, illustrated schematically are different example implementations of a system **100** incorporating an adaptive windshield **102** for light field display, in accordance with an embodiment of the present disclosure. The system **100** comprises the windshield **102,** which comprises:
a first substrate **104** and a second substrate **106** that are optically transparent; and
a liquid crystal (LC) layer **108** encased between the first substrate **104** and the second substrate **106,** wherein a surface of at least one of: the first substrate **104,** the second substrate **106** that is in contact with the LC layer **108** has at least one optical feature that pertains to at least one optical property, wherein the at least one optical property comprises at least one of: optical power, diffraction, refraction, transmittance, reflectance, polarization.

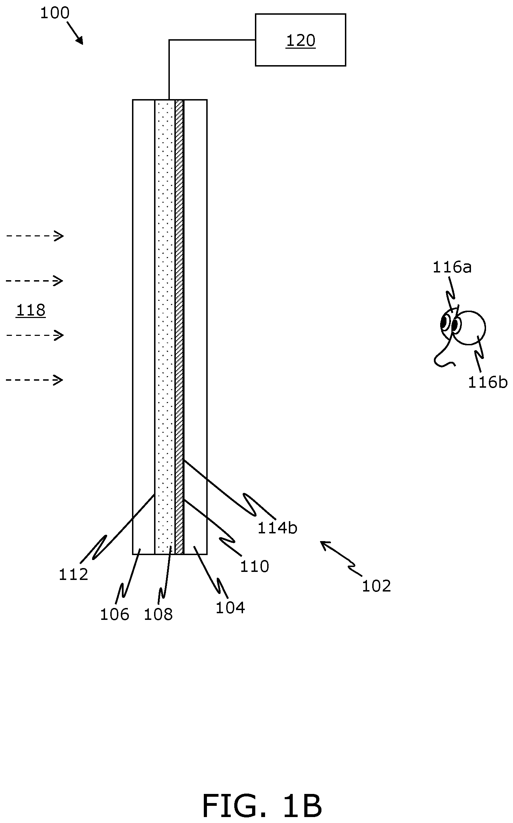

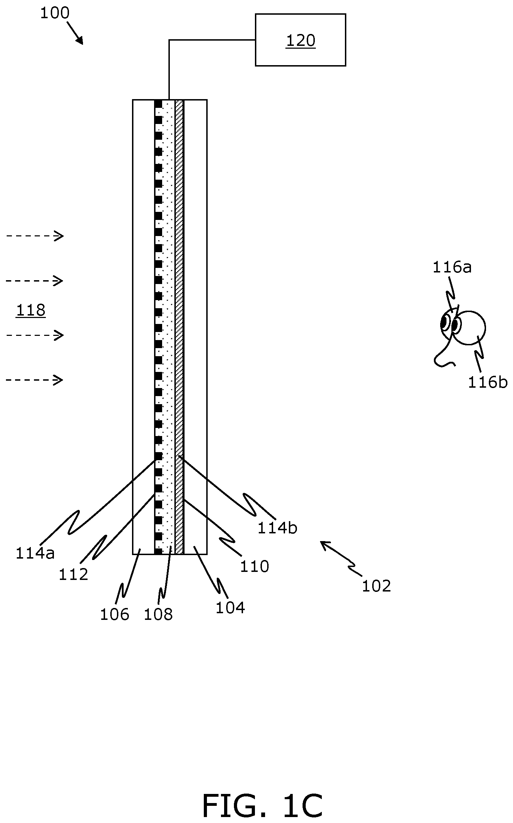

In FIGs. 1A-1C, there are shown a real-world-facing surface **110** of the first substrate **104** and a user-facing surface **112** of the second substrate **106.** In FIG. 1A, there is shown a first example implementation in which the at least one optical feature comprises an optical feature **114a** that is on the user-facing surface **112** of the second substrate **106.** In FIG. 1B, there is shown a second example implementation in which the at least one optical feature comprises another optical feature **114b** that is on the real-world-facing surface **110** of the first substrate **104.** In FIG. 1C, there is shown a third example implementation in which the at least one optical feature comprises the optical feature **114a** and the another optical feature **114b** that are on the user-facing surface **112** of the second substrate **106** and the real-world-facing surface **110** of the first substrate **104,** respectively. In use, the user's eyes **116a-b** see through the windshield **102,** wherein a real-world light field **118** emanating from a real-world environment passes through the windshield **102** towards the user's eyes **116a-b.**

The system **100** also comprises at least one processor, depicted as a processor **120.** The processor **120** is configured to selectively adjust a refractive index of an LC material in at least a given portion of the LC layer **108,** to modulate the at least one optical property in a corresponding portion of the windshield **102.**

Referring next to FIG. 1D, illustrated is an example implementation of the system **100,** in accordance with a specific embodiment of the present disclosure. Optionally, the system **100** further comprises:
tracking means **122;** and
a light field display unit **124,**
wherein at least a part of the windshield **102** is implemented as an optical combiner, and wherein the processor **120** is configured to:
   utilise the tracking means **122** to determine a relative location of a first eye **116a** and of a second eye **116b** of the user with respect to the optical combiner;
   generate an input to be employed by the light field display unit **124** for producing a synthetic light field **126,** based on the relative location of the first eye **116a** and of the second eye **116b** of the user with respect to the optical combiner; and
   employ the input at the light field display unit **124** to produce the synthetic light field **126,** wherein the optical combiner is employed to reflect a first part and a second part of the synthetic light field **126** towards the first eye **116a** and the second eye **116b** of the user, respectively, whilst optically combining the first part and the second part of the synthetic light field **126** with the real-world light field **118** of the real-world environment.

The real-world light field **118** presents at least one real-world object to the user's eyes **116a-b,** depicted as a real-world object **128** (shown as a tree, for illustration purposes only). The synthetic light field **126** presents at least one virtual object to the user's eyes **116a-b,** depicted as a virtual object **130** (shown as a star, for illustration purposes only).

Referring to FIG. 1E, illustrated is how a refractive index of an LC material in at least a given portion of the LC layer **108** can be selectively adjusted, to modulate the at least one optical property in a corresponding portion of the windshield **102,** in accordance with an embodiment of the present disclosure. In case of an autostereoscopic display, a first virtual image and a second virtual image of the virtual object **130** are shown to the first eye **116a** and the second eye **116b** of the user, respectively. The synthetic light field **126** emanating from the light field display unit **124** is reflected off a first portion **132a** and a second portion **132b** of the windshield **102** towards the first eye **116a** and the second eye **116b** of the user, respectively. Optionally, in this regard, an optical feature of reflectance is activated in at least the first portion **132a** and the second portion **132b** of the windshield **102** by selectively adjusting the refractive index of the LC material in at least a corresponding first portion and a corresponding second portion of the LC layer **108.** Similarly, other optical features can also be activated or deactivated on a need basis, during use, as described earlier.

It may be understood by a person skilled in the art that FIGs. 1A-1E include simplified example implementations of the system **100,** for sake of clarity, which should not unduly limit the scope of the claims herein. It is to be understood that the specific implementation of the system **100** is not to be construed as limiting it to specific numbers or types of windshields, first substrates, second substrates, LC layers, surfaces, optical features, processors, tracking means, and light field display units. A person skilled in the art will recognize many variations, alternatives, and modifications of embodiments of the present disclosure.

## Claims

1. A system (100) comprising:
a windshield (102) comprising:
a first substrate (104) and a second substrate (106) that are optically transparent; and
a liquid crystal (LC) layer (108) encased between the first substrate and the second substrate, wherein a surface of at least one of: the first substrate, the second substrate that is in contact with the LC layer has at least one optical feature (114a-b) that pertains to at least one optical property, wherein the at least one optical property comprises at least one of: optical power, diffraction, refraction, transmittance, reflectance, polarization; and
at least one processor (120) configured to selectively adjust a refractive index of an LC material in at least a given portion of the LC layer, to modulate the at least one optical property in a corresponding portion (132a-b) of the windshield.

2. The system (100) of claim 1, wherein the at least one optical feature (114a-b) comprises at least one of:
a shape of said surface,
a layer formed on said surface, said layer being disposed between said surface and the LC layer (108).

3. The system (100) of any of the preceding claims, wherein the at least one optical property comprises optical power, wherein said surface is implemented as a diffractive element, wherein when selectively adjusting, the at least one processor (120) is configured to:
adjust the refractive index of the LC material in at least the given portion of the LC layer (108) to be different from a refractive index of the at least one of: the first substrate (104), the second substrate (106), thereby allowing the diffractive element to produce an optical power at the corresponding portion (132a-b) of the windshield (102).

4. The system (100) of any of the preceding claims, wherein the at least one optical property comprises optical power, wherein in use, the first substrate (104) is on a side of a user, and the second substrate (106) is on a side of a real-world environment, said surface being a real-world facing surface (110) of the first substrate that is implemented as a diffractive element, while a user-facing surface (112) of the second substrate is semi-reflective, and the windshield (102) is curved, wherein when selectively adjusting, the at least one processor (120) is configured to:
determine an optical power being produced due to a curvature of the corresponding portion (132a-b) of the windshield; and
adjust the refractive index of the LC material in at least the given portion of the LC layer (108) to be different from a refractive index of the first substrate, thereby allowing the diffractive element to produce an optical power that is opposite to the determined optical power.

5. The system of any of the preceding claims, wherein the at least one optical property comprises reflectance, wherein in use, the first substrate (104) is on a side of a user, and the second substrate (106) is on a side of a real-world environment, said surface being a user-facing surface (112) of the second substrate,
wherein said surface has a sub-wavelength grating, and wherein when selectively adjusting, the at least one processor (120) is configured to:
adjust the refractive index of the LC material in at least the given portion of the LC layer (108), to match a refractive index of the second substrate, thereby reducing a reflectivity of said surface.

6. The system (100) of any of the preceding claims, wherein the at least one optical property comprises diffraction, wherein in use, the first substrate (104) is on a side of a user, and the second substrate (106) is on a side of a real-world environment, said surface being a user-facing surface (112) of the second substrate,
wherein said surface has a diffraction grating, and wherein when selectively adjusting, the at least one processor (120) is configured to:
adjust the refractive index of the LC material in at least the given portion of the LC layer (108), to be different from a refractive index of the second substrate, thereby allowing the diffraction grating to bend light.

7. The system (100) of any of claims 1-5, wherein the at least one optical property comprises reflection and phase shift, wherein in use, the first substrate (104) is on a side of a user, and the second substrate (106) is on a side of a real-world environment, said surface being a user-facing surface (112) of the second substrate,
wherein said surface has meta elements, and wherein when selectively adjusting, the at least one processor (120) is configured to:
adjust the refractive index of the LC material in at least the given portion of the LC layer (108), to be different from a refractive index of the second substrate, thereby allowing the meta elements to bend light.

8. The system (100) of any of the preceding claims, wherein the at least one optical property comprises polarization, wherein in use, the first substrate (104) is on a side of a user, and the second substrate (106) is on a side of a real-world environment, said surface being a user-facing surface (112) of the second substrate,
wherein the at least one optical feature (114a) is a layer of a surface function based polarizer on the user-facing surface, and wherein when selectively adjusting, the at least one processor (120) is configured to:
adjust the refractive index of the LC material in at least the given portion of the LC layer (108), to match a refractive index of the second substrate, thereby switching off the surface function based polarizer.

9. The system (100) of claim 8, wherein a real-world facing surface (110) of the first substrate (104) also has a layer of another surface function based polarizer, wherein a polarization orientation of the another surface function based polarizer of the real-world facing surface is orthogonal to a polarization orientation of the surface function based polarizer of the user-facing surface (112).

10. The system (100) of any of the preceding claims, further comprising tracking means, wherein the at least one processor (120) is configured to:
utilise the tracking means (122) to determine gaze directions of eyes (116a-b) of at least one user; and
select the given portion of the LC layer (108), based on the gaze directions of the eyes of the at least one user.

11. The system (100) of any of the preceding claims, further comprising:
tracking means; and
a light field display unit,
wherein at least a part of the windshield (102) is implemented as an optical combiner, and wherein the at least one processor (120) is configured to:
utilise the tracking means (122) to determine a relative location of a first eye and of a second eye of at least one user with respect to the optical combiner;
generate an input to be employed by the light field display unit (124) for producing a synthetic light field, based on the relative location of the first eye and of the second eye of the at least one user with respect to the optical combiner; and
employ the input at the light field display unit to produce the synthetic light field, wherein the optical combiner is employed to reflect a first part and a second part of the synthetic light field (126) towards the first eye and the second eye of the at least one user, respectively, whilst optically combining the first part and the second part of the synthetic light field with a real-world light field (118) of a real-world environment.

12. A method implemented by a system comprising a windshield (102) comprising a first substrate (104) and a second substrate (106) that are optically transparent, and a liquid crystal (LC) layer (108) encased between the first substrate and the second substrate, the method comprising:
employing at least one optical feature (114a-b) of a surface of at least one of: the first substrate, the second substrate that is in contact with the LC layer (108) to produce at least one optical property, wherein the at least one optical property comprises at least one of: optical power, diffraction, refraction, transmittance, reflectance, polarization; and
selectively adjusting a refractive index of an LC material in at least a given portion of the LC layer, to modulate the at least one optical property in a corresponding portion (132a-b) of the windshield.

13. The method of claim 12, wherein the at least one optical property comprises optical power, wherein said surface is implemented as a diffractive element, wherein the step of selectively adjusting comprises:
adjusting the refractive index of the LC material in at least the given portion of the LC layer (108) to be different from a refractive index of the at least one of: the first substrate (104), the second substrate (106), thereby allowing the diffractive element to produce an optical power at the corresponding portion (132a-b) of the windshield (102).

14. The method of any of claims 12-13, wherein the at least one optical property comprises optical power, wherein in use, the first substrate (104) is on a side of a user, and the second substrate (106) is on a side of a real-world environment, said surface being a real-world facing surface (110) of the first substrate that is implemented as a diffractive element, while a user-facing surface (112) of the second substrate is semi-reflective, and the windshield (102) is curved, wherein the step of selectively adjusting comprises:
determining an optical power being produced due to a curvature of the corresponding portion (132a-b) of the windshield; and
adjusting the refractive index of the LC material in at least the given portion of the LC layer (108) to be different from a refractive index of the first substrate, thereby allowing the diffractive element to produce an optical power that is opposite to the determined optical power.

15. The method of any of claims 12-14, wherein the at least one optical property comprises reflectance, wherein in use, the first substrate (104) is on a side of a user, and the second substrate (106) is on a side of a real-world environment, said surface being a user-facing surface (112) of the second substrate,
wherein said surface has a sub-wavelength grating, and wherein the step of selectively adjusting comprises:
adjusting the refractive index of the LC material in at least the given portion of the LC layer (108), to match a refractive index of the second substrate, thereby reducing a reflectivity of said surface.

16. The method of any of claims 12-15, wherein the at least one optical property comprises diffraction, wherein in use, the first substrate (104) is on a side of a user, and the second substrate (106) is on a side of a real-world environment, said surface being a user-facing surface (112) of the second substrate,
wherein said surface has a diffraction grating, and wherein the step of selectively adjusting comprises:
adjusting the refractive index of the LC material in at least the given portion of the LC layer (108), to be different from a refractive index of the second substrate, thereby allowing the diffraction grating to bend light.

17. The method of any of claims 12-15, wherein the at least one optical property comprises reflection and phase shift, wherein in use, the first substrate (104) is on a side of a user, and the second substrate (106) is on a side of a real-world environment, said surface being a user-facing surface (112) of the second substrate,
wherein said surface has meta elements, and wherein the step of selectively adjusting comprises:
adjusting the refractive index of the LC material in at least the given portion of the LC layer (108), to be different from a refractive index of the second substrate, thereby allowing the meta elements to bend light.

18. The method of any of claims 12-17, wherein the at least one optical property comprises polarization, wherein in use, the first substrate (104) is on a side of a user, and the second substrate (106) is on a side of a real-world environment, said surface being a user-facing surface (112) of the second substrate,
wherein the at least one optical feature (114a) is a layer of a surface function based polarizer on the user-facing surface, and wherein the step of selectively adjusting comprises:
adjusting the refractive index of the LC material in at least the given portion of the LC layer (108), to match a refractive index of the second substrate, thereby switching off the surface function based polarizer.
